# EUROPEAN PATENT SPECIFICATION

(11) **EP 3 024 080 B1**
(45) Date of publication and mention of the grant of the patent: **04.09.2019**
(21) Application number: 14825952.6
(22) Date of filing: 15.07.2014
(51) Int. Cl.: H01M 8/18

(54) **ALL-VANADIUM REDOX FLOW BATTERY AND OPERATION METHOD THEREOF**
VANADIUM REDOX-DURCHFLUSSBATTERIE UND BETRIEBSVERFAHREN DAFÜR
BATTERIE À FLUX D'OXYDORÉDUCTION TOUT EN VANADIUM ET SON PROCÉDÉ DE FONCTIONNEMENT

(30) Priority: 17.07.2013 CN 201310301519
(43) Date of publication of application: 25.05.2016
(73) Proprietor: Dalian Rongke Power Co., Ltd., Dalian, Liaoning 116025 (CN)
(72) Inventor: GAO, Xinliang, Dalian Liaoning 116025 (CN); ZHANG, Huamin, Dalian Liaoning 116025 (CN); WANG, Xiaoli, Dalian Liaoning 116025 (CN); LIU, Ruonan, Dalian Liaoning 116025 (CN); LI, Ying, Dalian Liaoning 116025 (CN); ZHAO, Yelong, Dalian Liaoning 116025 (CN); LIN, Zeqing, Dalian Liaoning 116025 (CN)
(74) Representative: Proi World Intellectual Property GmbH
(86) International application number: PCT/CN2014/082235
(87) International publication number: WO 2015/007204

(56) References cited:
- EP-A1- 1 143 546
- WO-A1-89/05526
- CN-A- 101 572 319
- CN-A- 101 635 363
- CN-A- 102 881 933
- CN-A- 103 367 785
- JP-A- 2001 093 560
- JP-A- 2003 157 882
- WANG ET AL: "Investigation of Ir-modified carbon felt as the positive electrode of an all-vanadium redox flow battery", ELECTROCHIMICA ACTA, ELSEVIER SCIENCE PUBLISHERS, BARKING, GB, vol. 52, no. 24, 9 July 2007 (2007-07-09), pages 6755-6762, XP022145539, ISSN: 0013-4686, DOI: 10.1016/J.ELECTACTA.2007.04.121
- WANG, W.H. ET AL.: 'Investigation of Ir-modified Carbon Felt as the Positive Electrode of an All-vanadium Redox Flow Battery.' ELECTROCHIMICA ACTA. vol. 52, 10 May 2007, page 6756, XP022145539

## Description

### TECHNICAL FIELD

The present invention relates to an all-vanadium redox flow battery and operation method thereof, which belongs to the field of flow batteries.

### BACKGROUND OF THE INVENTION

As a novel, green secondary storage battery, in comparison with other battery systems, all-vanadium redox flow battery (VFB) has incomparable advantages of long cycle life, easy scale development, quick response, and free location selection. VFB has been successfully applied to various large-scale solar energy and wind energy storage devices, large emergency power systems, and reducing peak and filling valley of electricity systems.

Electrolyte is a key material and energy storage media of the vanadium redox flow battery. During charging, the electrolyte is driven by positive magnetic drive pumps and negative magnetic drive pumps, the positive solution and negative solution performs the following reaction by ion conducting membrane:

positive electrode reaction: VO²⁺+H₂O → VO₂⁺ +2H⁺+e⁻ E₀=1.00V ... (1)

negative electrode reaction: V³⁺+e⁻ →V²⁺ E₀=-0.26V .... (2)

### Hydrogen evolution reaction:

When the charging proceeds to a certain degree, V²⁺ in negative electrolyte reaches a certain concentration and reacts with H⁺ in electrolyte then hydrogen evolution happens as follow equation:

2V²⁺+2H⁺→2V³⁺+ H₂↑ (3)

This reaction directly results in reduction of the total amount of V²⁺ which participates in discharge in negative electrolyte, the discharge capacity of the VFB system reduces accordingly. With the operation of the VFB system, side effects of the hydrogen evolution reaction accumulate continuously and cause imbalance to valance state of the positive electrolyte and negative electrolyte, which will seriously affect the efficiency of the VFB system, and the generation of the hydrogen brings danger to the environment. The above problems have become the technical bottlenecks required to be solved urgently in the practical application stage of the VFB.

### Operation safety (additives):

After full charge of the positive electrolyte, V⁵⁺ approaches a high concentration (>1M). In such circumstances, when the VFB system operates at a temperature over 40°C, the positive electrolyte is possible to generate the precipitate of V₂O₅↓. The precipitate blocks the porous structure of the electrode, results in breakdown of the VFB system, and increases the battery maintenance costs. If cooling measures are taken, the-costs and energy consumption of supporting facilities for configuring the heat exchange system are quite large.

In such circumstances, adding a certain amount of additives into positive electrolyte and negative electrolyte to improve the operation stability of positive electrolyte at a temperature over 40°C is one of the problems that must be solved.

In recent years, many electrolyte stability additives were studied both at home and abroad, include the following:
1) Organic micromolecules, such as glycerinum, alcohols, organic acids, organic urea, etc. The study found that these organic molecules can occur redox reaction with V⁵⁺ in positive electrolyte and reduce V⁵⁺ to V⁴⁺, the organic molecules themselves be oxidized to CO₂ and water, and lose the stable capabilities of V⁵⁺ ions.
2) Alkali metal sulphates, sodium sulfate, potassium sulfate, magnesium sulfate, etc. There are a lot of reports on the alkali metal salts, but the effects can be only achieved by adding a certain amount of additives (>2%, m/v), lead to the concentrations of the foreign metal ions rise in the solution, and there is no application data to support the stably operation of charge-discharge in pilot scale experiment.

Phosphoric acids and phosphates have been reported as vanadium electrolyte stabilizer, but the study on the low-temperature stability of negative electrolyte of with stabilizer is still blank, and there is no report on the storage stability test data under the long-term extreme conditions.

A European invention patent No. EP1143546 disclosed an operation method of VFB, which refers to dispose connecting pipes on the upper of liquid storage tanks for positive and negative electrolyte to alleviate the short-term capacity reduction of the system caused by the mutual migration of the positive electrolyte and negative electrolyte. But EP1143546 fails to avoid the irreversible capacity decline caused by the side effects of hydrogen evolution reaction, and has limited effect for drastically reduce attenuation of discharge capacity after long-term operation of the VFB system.

The article "Wang, W.H. et al.: Investigation of Ir-modified carbon felt as the positive electrode of an all-vanadium redox flow battery" (Electrochimica Acta, Vol. 52, 10th May 2007 (2007-05-10), page 6756, XP022115539) discloses an all-vanadium redox flow battery comprising positive electrolyte and negative electrolyte. The positive electrolyte consists of a solution of 0.5 M VOSO₄/0.25 M (VO₂)₂SO₄ in 2 M H₂SO₄, and the negative electrolyte consists of a solution of 0.5 M VOSO₄/0.25 M (VO₂)₂SO₄ in 2 M H₂SO₄. Both the positive electrolyte and negative electrolyte comprise an additive (2 M H₂SO₄).

WO 89/05526 A1 relates to an all-vanadium redox battery comprising positive electrolyte and negative electrolyte. Additives are added to improve the stability of the electrolytes.

EP 1 143 546 A1, which is an equivalent to JP 27334499A (JP2001093560A), discloses a redox flow-type battery which is a liquid-circulating battery comprising a battery cell and storage tanks for positive and negative electrolytes, wherein the battery cell is separated by a membrane to provide a positive cell and a negative cell, each cell having a liquid-permeable porous electrode disposed therein, wherein the positive and negative electrolytes are sulphuric acid aqueous solutions with vanadium ion concentrations of 0.5 mol/l to 8 mol/l, and the electrolyte which migrates through the membrane over cycles of charging and discharging is returned from the storage tank, where the liquid accumulates, to the storage tank, where the liquid is depleted, through a pipe in order to keep the change in the amounts of the positive and negative electrolytes within a certain range while the charging and discharging processes are performed.

### DISCLOSURE OF INVENTION

The present invention aims to provide an all-vanadium redox flow battery.

An all-vanadium redox flow battery, comprising positive electrolyte and negative electrolyte; wherein the total vanadium ratio of the positive electrolyte to the negative electrolyte is always maintained as 1 : 1.3 ∼1:1.2; and both the positive electrolyte and negative electrolyte comprise additive, wherein the concentration of the additive is 0.01 mol/L∼0.5mol/L,

Wherein, the additive is selected from at least one of sulfuric acid, sulfate, phosphoric acid, phosphate, pyrophosphate, and polyphosphates.

The total vanadium amount in the electrolyte equals the concentration of the vanadium ions in the electrolyte times electrolyte volume; wherein the total vanadium ratio of the positive electrolyte to the negative electrolyte refers to the ratio of the total vanadium amount in the positive electrolyte to the total vanadium amount in the negative electrolyte; wherein the concentration of the vanadium ion in the positive electrolyte is identical with that in the negative electrolyte; wherein the vanadium ion concentration is the sum of the vanadium ions of various valence in the electrolyte.

In the prior art, the positive electrolyte and negative electrolyte in the vanadium redox flow battery are respectively stored in positive electrolyte storage tanks and negative electrolyte; and the total vanadium ratios of the positive electrolyte to the negative electrolyte are equal. Both the positive electrolyte and negative electrolyte are prepared by VOSO₄ and V₂ (SO₄)₃ in a ratio of 1:0.5 (namely V⁴⁺: V³⁺=1:1), and the ratio of V⁴⁺ to H₂SO₄ is 1:1.5-1:2. When the charge proceeds to a certain degree, V²⁺ concentration of negative electrolyte is higher than a certain value and hydrogen evolution happens. The hydrogen evolution reaction has positive correlation with V²⁺ concentration, namely the higher the V²⁺ concentration is, the faster the H₂ is generated. Therefore, the present invention reduce the ratio of V2⁺ in total vanadium (Vⁿ⁺) amount in the negative electrolyte during the battery operation (SOC state), which means that the V²⁺ concentration of the negative electrolyte is reduced by making the total vanadium amount in negative electrolyte greater than that in positive electrolyte in a certain ratio. In practical operation, through controlling the initial volume ratio of the positive electrolyte to negative electrolyte, and always maintains the volume ratio of the positive electrolyte and negative electrolyte during the operation, the hydrogen evolution reaction in the negative electrolyte is minimized so as to maintain a lower capacity attenuation rate of the VFB system. Additionally, during operation, the ratio of the total vanadium amount in the positive electrolyte to that in the negative electrolyte can be controlled by transferring the positive electrolyte into the negative electrolyte, and the volume of the transferred electrolyte is determined by real time measurement of the vanadium ion concentrations in the positive and negative electrolyte and the volumes of the positive and negative electrolyte.

The total vanadium amount in positive electrolyte and the total vanadium amount in negative electrolyte are always maintained in a ratio of 1: 1.3 ∼1:1.2. If it is found that the total vanadium amount in positive electrolyte approaches that in negative electrolyte by sample testing after multiple cycles of operation, a certain amount of positive electrolyte is exported to negative electrolyte through the connecting valve so as to maintain the total vanadium amount in positive electrolyte and the total vanadium amount in negative electrolyte in a ratio of 1: 1.3 ∼1:1.2.

When the above measure is taken, the volume of the positive electrode is relatively reduced, so the ratio of V⁵⁺ in the positive electrolyte can reach over 85% (about 60% in the normal state) after the charging is completed. In such circumstances, in order to prevent the positive electrolyte from generating precipitate during high temperature operation(temperature > 45 °C). additives are added into positive and negative electrolytes while the ratio of the total vanadium amounts in the VFB system is controlled so as to restrain the precipitation of V³⁺ in negative solution at a low temperature and the precipitation of V⁵⁺ in positive solution at a high temperature, and thus realize one kind of additive to stabilize the whole VFB system.

Wherein the additive of the all-vanadium redox flow battery in the present invention is selected from at least one of sulfuric acid, sulfate, phosphoric acid, phosphate, pyrophosphate, and polyphosphates, wherein the positive iron is Na⁺ preferably.

The additive is preferably added into positive electrolyte and negative electrolyte by the following method:
Negative electrolyte: directly add the additive into the negative electrolyte such that the additive concentration reaches 0.01∼0.5mol/L, and then stir the solution until the additive is completely dissolved.

Positive electrolyte: dilute the additive with water (the volume ratio of the additive to the water is 1:1∼1:4), then add the diluted additive into the positive electrolyte.

The additive can be added at any temperature in the range of -15°C∼55°C. Wherein, the adding amount of the polyphosphates should be calculated on the basis of 0.01 ∼0.5mol/L corresponding monomer salts in the electrolyte.

The all-vanadium redox flow battery described in the present invention, the total vanadium ratio of the positive electrolyte to the negative electrolyte is maintained as: positive: negative=1:1.3∼1:1.2.

The all-vanadium redox flow battery described in the present invention, the additive is preferably phosphoric acid or phosphate.

The all-vanadium redox flow battery described in the present invention, the additive concentration is preferably 0.04∼0.20mol/L, and further preferably is 0.20 mol/L.

An operation method of the all-vanadium redox battery system, the total vanadium ratio of the positive electrolyte to the negative electrolyte is maintained as: positive: negative=1: 1.3∼ 1:1.2, and the range of the charge-discharge cut-off voltage of the all-vanadium redox flow battery is 0.9∼1.58V.

The operation method of the all-vanadium redox flow battery system described in the present invention, the charge-discharge operation temperature of the all-vanadium redox flow battery is preferably 0°C∼50°C, and the all-vanadium redox flow battery should be stored in the full charged state at a temperature of -20°C∼45°C.

The above-mentioned flow battery, of which the total vanadium amounts of the positive electrolyte and negative electrolyte is distributed differently, avoids the capacity attenuation, meanwhile the total discharge capacity (electrolyte utilization rate) is influenced at a certain degree (according to the different total vanadium ratios, the total discharge capacity is reduced by about 20% in comparison with the equivalent initial vanadium amounts of positive electrolyte and negative electrolyte). In order to solve this problem, the operation method of expanding the charge-discharge cut-off voltage range is employed. Expand the conventional charge-discharge cut-off voltage 1.0∼1.55V to 0.9∼1.58V so as to solve the problem of decline in electrolyte utilization rate that caused by difference in the total vanadium amounts of the positive electrolyte and negative electrolyte.

The present invention has the following beneficial effects:
The present invention puts forward a novel operation method for the all-vanadium redox flow battery, namely making different total vanadium amounts in the positive and negative electrolyte, varying the voltage range, and using the phosphates additive. This method can maintain the VFB system operating at a high energy density and significantly reduce the irreversible attenuation of the discharge capacity caused by the hydrogen evolution. This operation method is simple, which does not increase any cost greatly enhances the utilization rate of electrolyte, improves the battery performance, and is suitable to industrialization.

### Description of Figures

Figure 1 is a capacity variation curve diagram of the flow battery in embodiment 2.
Figure 2 is a capacity variation curve diagram of the flow battery in embodiment 3.
Figure 3 is a capacity variation curve diagram of the flow battery in embodiment 4.

### Detailed Description of the Preferred Embodiments

The following non-restrictive embodiments can help those ordinarily person skilled in the art understand the present invention comprehensively, without limiting the present invention in any way.

Embodiment 1 tests the stabilization effect of the phosphoric acid and its salts additive at high and low temperatures.

In Embodiments 2-4, the tested batteries, a small 4w single cell (48cm² electrode area) and a 1.5kW stack (875cm²/cell, 15cells), respectively employ the Nafion115 ion membranes. On condition that the charge-discharge current density is 80mA/cm2, test and compare the batteries' performance in the present operation method with the common operation method at temperature of 25°C/40°C/45°C. The vanadium ion concentrations in the electrolytes are all 1.55M.

### Embodiment 1

### Static storage test of the phosphoric acid and sodium phosphate additives

### 1.1 High-temperature contrast test of positive solution

Place pure pentavalent vanadium (V⁵⁺) electrolytes respectively with vanadium ion concentrations of 1.66M and 1.83M in 10mL airtight plastic centrifugal tube. Add phosphoric acid in a concentration of 0.05M~0.3M into the centrifugal tube, place the tubes in 40°C and 50°C water baths to make contrast test, and observe the electrolyte. The test results are showed in Table 1.

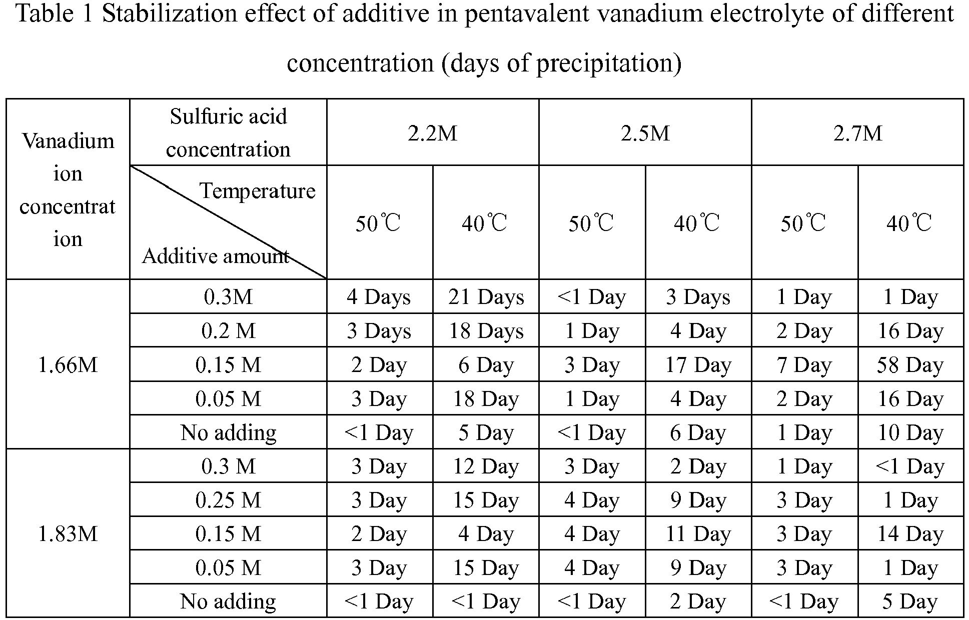

The above data show that, for the electrolyte sample with the same parameter, the stabilization time varies with the addictive adding amount.

### 1.2 Low-temperature storage test:

**Test the low-temperature stabilization effect of the adding amount of the above additive to the trivalent vanadium solution at a low temperature by using the same method.**

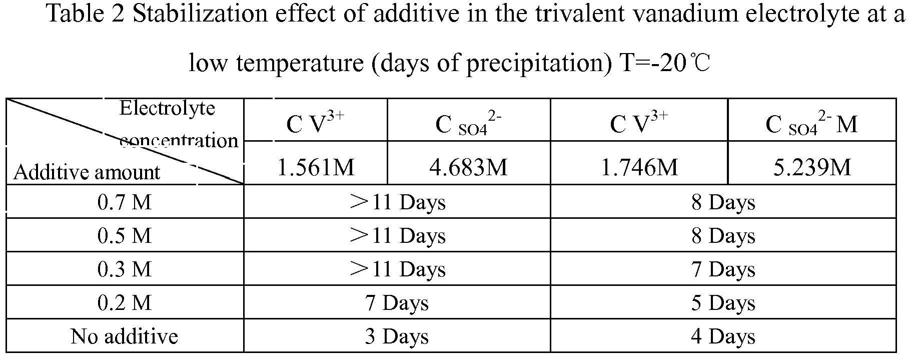

The low-temperature stabilization effect of the additive to the trivalent vanadium electrolyte is proportional, which means that the more amount the additive is added, the better the low-temperature stabilization is.

### Embodiment 2

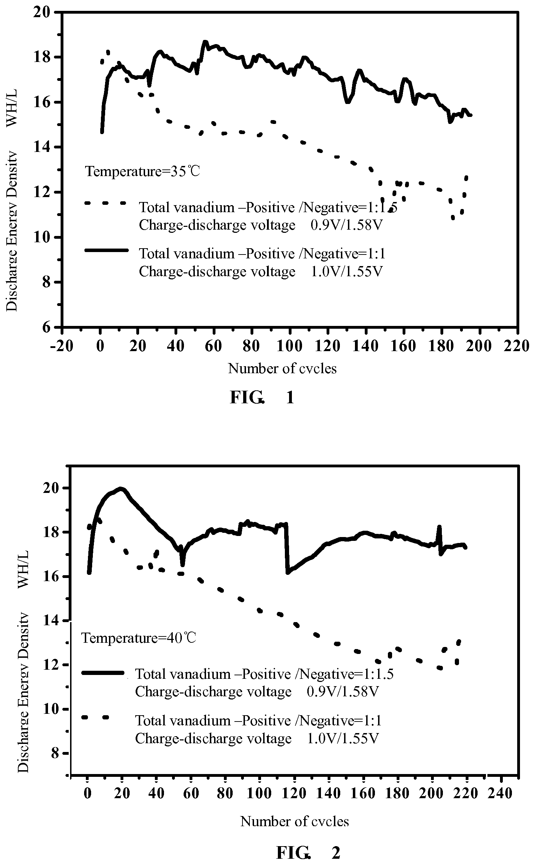

The test parameters and the test results are showed in the table below. The capacity variation curve is showed in Figure 1.

| Item | Total vanadium ratio 7:9 (positive/negative) | Total vanadium ratio 1:1 |
|---|---|---|
| Electrolyte temperature | 35°C | |
| Charge/discharge cut-off voltage | 0.9 V/1.58 V | 1.0 V/1.55V |
| Battery model | electrode area: 48cm² (4W) | |
| Sodium pyrophosphate | 0.15M | |
| Attenuation rate (200 cycles) | 11.3% | 33% |
| Energy density (200 cycles, average) | 17.2wh/L | 14.4 wh/L |

### Embodiment 3

The test parameters and the test results are showed in the table below. The capacity variation curve is showed in Figure 2.

| Item | Total vanadium ratio 5:6 (positive/negative) | Total vanadium ratio 1:1 (positive/negative) |
|---|---|---|
| Electrolyte temperature | 40°C | |
| Battery model | electrode area: 48cm² (4W) | |
| Phosphoric acid | 0.2 M | |
| Charge/discharge cut-off voltage | 0.9 V/1.58V | 1.0 V/1.55V |
| Attenuation rate (200 cycles) | 13% | 28% |
| Energy density (200 cycles, average) | 17.8wh/L | 14.7 wh/L |

### Embodiment 4

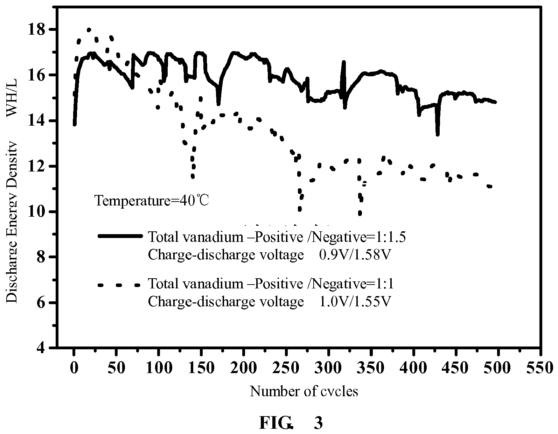

The test parameters and the test results are showed in the table below. The capacity variation curve is showed in Figure 3.

| Item | Total vanadium ratio 6:7 (positive/negative) | Total vanadium ratio 1:1 (positive/negative) |
|---|---|---|
| Electrolyte temperature | 40°C | |
| Phosphoric acid | 0.15M | |
| Battery model | electrode area: 875cm²/cell, 15 cells (2kW) | |
| Charging/discharging cut-off voltage | 0.9 V/1.58V | 1.0 V/1.55V |
| Attenuation rate (500 cycles) | 7.5% | 17.5% |
| Energy density (500 cycles, average) | 18.5wh/L | 12.7 wh/L |

## Claims

1. An all-vanadium redox flow battery, comprising positive electrolyte and negative electrolyte,
wherein both the positive electrolyte and negative electrolyte comprise an additive;
wherein the additive is selected from at least one of sulfuric acid, sulfate, phosphoric acid, phosphate, pyrophosphate and polyphosphates;
**characterized in that**
the total vanadium ratio of the positive electrolyte to the negative electrolyte is maintained as positive : negative = 1 : 1.3- 1 : 1.2; and
the concentration of the additive is 0.01 mol/l - 0.5 mol/l.

2. The all-vanadium redox flow battery according to claim 1, wherein the additive is phosphoric acid or phosphate.

3. The all-vanadium redox flow battery according to claim 1, wherein the concentration of the additive is 0.04 mol/l - 0.2 mol/l.

4. An operation method of the all-vanadium redox battery system, wherein the total vanadium ratio of the positive electrolyte to the negative electrolyte is maintained as positive : negative = 1 : 1.3- 1 : 1.2; and the charge-discharge cut-off voltage of the all-vanadium redox flow battery is 0.9 - 1.58 V.

5. The operation method according to claim 5 or 6, wherein the charge-discharge operation temperature of the all-vanadium redox flow battery is 0 - 50 °C; and wherein the storage temperature of the all-vanadium redox flow battery in the full charged state is -20 to 45 °C.

## Patentansprüche

1. Vollvanadium-Redox-Flow-Batterie, umfassend einen positiven Elektrolyten und einen negativen Elektrolyten,
wobei sowohl der positive Elektrolyt als auch der negative Elektrolyt ein Additiv umfassen,
wobei das Additiv ausgewählt ist aus Schwefelsäure, Sulfat, Phosphorsäure, Phosphat, Pyrophosphat und / oder Polyphosphaten;
**dadurch gekennzeichnet, dass**
das Gesamt-Vanadium-Verhältnis des positiven Elektrolyten zum negativen Elektrolyten positiv ist: negativ = 1:1,3 ∼ 1:1,2; und wobei die Konzentration des Additivs 0,01 mol/l ∼ 0,5 mol/l beträgt.

2. Vollvanadium-Redox-Flow-Batterie nach Anspruch 1, wobei das Additiv Phosphorsäure oder Phosphat ist.

3. Vollvanadium-Redox-Flow-Batterie nach Anspruch 1, wobei die Konzentration des Additivs 0,04 bis 0,2 mol/l beträgt.

4. Betriebsverfahren des Vollvanadium-Redox-Batteriesystems, bei dem das Gesamt-Vanadium-Verhältnis des positiven Elektrolyten zum negativen Elektrolyten positiv ist: negativ = 1:1,3 ∼ 1:1,2 und die Lade-Entladespannung der Vollvanadium-Redox-Flow-Batterie beibehalten wird ist 0,9 ∼ 1,58 V.

5. Betriebsverfahren nach Anspruch 5 oder 6, wobei die Lade-Entlade-Betriebstemperatur der Vollvanadium-Redox-Flow-Batterie 0 bis 50°C beträgt; und die Vanadium-Redox-Flow-Batterie sollte im voll geladenen Zustand bei einer Temperatur von -20 ∼ 45°C gelagert werden.

## Revendications

1. Batterie à flux d'oxydoréduction tout vanadium, comprenant un électrolyte positif et un électrolyte négatif,
dans laquelle à la fois l'électrolyte positif et l'électrolyte négatif comprennent un additif ;
dans laquelle l'additif est sélectionné parmi au moins un de l'acide sulfurique, du sulfate, de l'acide phosphorique, du phosphate, du pyrophosphate et des polyphosphates ;
**caractérisée en ce que**
le rapport de vanadium total de l'électrolyte positif sur l'électrolyte négatif est maintenu comme positif : négatif = 1 : 1,3 à 1 : 1,2 ; et
la concentration de l'additif est de 0,01 mol/l à 0,5 mol/l.

2. Batterie à flux d'oxydoréduction tout vanadium selon la revendication 1, dans laquelle l'additif est de l'acide phosphorique ou du phosphate.

3. Batterie à flux d'oxydoréduction tout vanadium selon la revendication 1, dans laquelle la concentration de l'additif est de 0,04 mol/l à 0,2 mol/l.

4. Procédé de fonctionnement du système de batterie à flux d'oxydoréduction tout vanadium, dans lequel le rapport de vanadium total de l'électrolyte positif sur l'électrolyte négatif est maintenu comme positif : négatif =1 : 1,3 à 1 : 1,2 ; et la tension de coupure de charge-décharge de la batterie à flux d'oxydoréduction tout vanadium est de 0,9 à 1,58 V.

5. Procédé de fonctionnement selon la revendication 5 ou 6, dans lequel la température de fonctionnement de charge-décharge de la batterie à flux d'oxydoréduction tout vanadium est de 0 à 50 °C ; et dans lequel la température de stockage de la batterie à flux d'oxydoréduction tout vanadium dans l'état de pleine charge est de -20 à 45 °C.
